# EUROPEAN PATENT SPECIFICATION

(11) **EP 4 243 038 B1**
(45) Date of publication and mention of the grant of the patent: **18.02.2026**
(21) Application number: 22305271.3
(22) Date of filing: 10.03.2022
(51) Int. Cl.: H01B 7/282, C22C 14/00

(54) **WATER BARRIER MATERIALS FOR A DYNAMIC POWER CABLE FOR SUBMARINE APPLICATIONS**
WASSERSPERRMATERIALIEN FÜR EIN DYNAMISCHES STROMKABEL FÜR UNTERWASSERANWENDUNGEN
MATÉRIAUX FORMANT BARRIÈRE À L'EAU POUR UN CÂBLE D'ALIMENTATION DYNAMIQUE DESTINÉ AUX APPLICATIONS SOUS-MARINES

(43) Date of publication of application: 13.09.2023
(73) Proprietor: Nexans, 92400 Courbevoie (FR)
(72) Inventor: JOHANSON, Audun, 0653 OSLO (NO)
(74) Representative: Acapo Onsagers AS

(56) References cited:
- WO-A1-2018/226241
- CN-A- 107 610 806
- CN-U- 209 447 581
- JP-A- H0 456 809
- DATABASE WPI Week 201744, 13 June 2017 Derwent World Patents Index; AN 2017-411527, XP002807337

## Description

### FIELD OF THE INVENTION

The present invention relates to metallic water barrier materials for dynamic power cables and in particular high voltage dynamic power cables for submarine applications.

### INTRODUCTION

As the world's maritime infrastructure is developing, the use of submarine cables to deliver electric power below, above, in or across bodies of water is rapidly increasing. Submarine power cables are slender structures and are commonly suspended between a floating unit located at the surface of a body of water, from where electric power is typically delivered to equipment on the seabed. The range of applications for submarine power cables is wide, comprising any sea-based installation required to receive or transmit electricity such as oil and gas production installations to renewable energy production sites such as offshore wind farms. The submarine power cables are thus typically exposed to mechanical loads imposed during dynamic movements of the cable from wave motions and underwater currents. The desired lifetime of a submarine power cable is between 10-50 years, and all components in the cable should therefore sustain exposure to mechanical loads for long periods of time.

Submarine power cables are required to have a water barrier sheathing to keep the cable core dry. The water barrier sheathing should completely block convection or diffusion of water, as an ingress of moisture can ultimately lead to a failure of the cable.

A conventional water barrier sheathing is typically manufactured by a continuous or discontinuous extrusion of a seamless tube, and often comprises lead or lead alloys due to their extrudability and high ductility.

However, these conventional materials do not typically have good resistance to material fatigue, and often exhibit cracks when used in heavier cables, or when deployed in dynamic applications.

High voltage dynamic cables using a water barrier made of a longitudinally welded sheath (LWS) or metal-polymer composite consisting of an metal layer laminated between two layers of insulating or non- insulating polymer layers can reach their limit in terms of operational life time in a dynamic setting- in particular for shallow waters, large power phase cross-section or in particular harsh environments.

Thus, there is a need for dynamic subsea cables which resolve one or more of the deficiencies of conventional cables and meet current industry performance requirement for dynamic subsea cables. JPH0456809A discloses a dynamic submarine power cable comprising a cable core comprising an insulated electrical conductor and a water barrier sheath arranged around the cable core, wherein the water barrier sheath comprises a titanium containing alloy metal layer, such as Ti-6Al-4V alloy, which is sealed by welding.

The present invention has solved the above mentioning need by providing a metallic water barrier sheathing or a water barrier laminated metal foil sheathing for high voltage dynamic cables wherein the metal of the water barrier is a titanium alloy that provides a high-quality low weight water barrier sheathing that has an improved fatigue life, a high tensile strength, tolerate high dynamic workload and also being highly corrosion resistant in sea water.

### SUMMARY OF THE INVENTION

The present inventors have solved the above-mentioned need by providing **in a first aspect** a dynamic power cable comprising
- at least one cable core comprising an electrical conductor and an electrically insulating layer that is arranged radially outside of the electrical conductor, and
- a water barrier sheath that is arranged radially outside of the cable core, wherein the water barrier sheath comprises a metal layer, wherein the metal layer a Ti alloy as defined in claim 1.

In one embodiment of the first aspect the water barrier sheath is formed around the cable core and welded to form a tube.

In one embodiment of the first aspect, the water barrier sheath is welded by autogenous laser beam welding.

In one embodiment of the first aspect wherein thickness (T) of the water barrier sheath is in a range from 0.1mm to 3mm, or from 0.1mm to 2mm or from 0.5mm to 1.5mm or from 0 3mm to 1 5 mm or from 0.4mm to 0 7 mm

In one embodiment of the first aspect the water barrier sheath is corrugated.

In one embodiment of the first aspect the water barrier sheath is corrugated with an inner diameter (Di) in a range of 40 mm to 120 mm, a corrugation pitch (p) in a range of 5 mm to 100 mm and a corrugation depth (D) in range from 5 mm to 30 mm.

In one embodiment of the first aspect wherein the laser beam welded Ti sheath has an ultimate tensile strength in the range from 200 MPa to 1100 MPa according to standard test method ASTME8.

**In a second aspect** there is provided a dynamic power cable comprising
- at least one cable core comprising an electrical conductor and an electrically insulating layer that is arranged radially outside of the electrical conductor, and
- a water barrier laminate, wherein the water barrier laminate comprises a metal foil made of a titanium-based material which is a Ti alloy laminated between at least two layers of insulating or non-insulating polymer constituting a final laminate that is insulating or non-insulating.

In one embodiment of the second aspect the laminated structure being wrapped around the cable core with at least some overlap between opposite edges of the laminate structure and wherein the opposite edges of the laminate structure is joined by thermal heating.

In one embodiment of the second aspect wherein a thickness (T) of the metal foil is in a range from 10 to 250 µm, from 15 to 200 µm, from 20 to 150 µm, from 25 to 100 µm, and preferably from 30 to 75 µm.

In one embodiment of **the first aspect or the second aspect,** the metal layer is an alpha Ti based material or a near alpha Ti based material.

In one embodiment of the first aspect or the second aspect the **alpha Ti based material** is selected from
- a **Ti alloy** that has a Ti content from 95% to 98% by weight, a Cu content from 2% to 4% by weight and a content of incidental elements and impurities 0 to 1% by weight based on the total weight of the Ti alloy, and wherein the content of Ti, Cu and incidental elements and impurities sum up to 100 % by weight.
- a **Ti alloy** that has a Ti content of from 89% to 94% by weight, a Al content from 4% to 6% by weight, a Sn content from 2% to 4% by weight and a content of incidental elements and impurities from 0 to 1% by weight based on the total weight of the Ti alloy, and wherein the content of Ti, Al, Sn and incidental elements and impurities sum up to 100 % by weight.

In one embodiment of the first aspect or the second aspect the **near alpha** Ti based material is selected from
- a **Ti alloy** that has a Ti content from 87% to 91% by weight, a Al content from 7% to 9% by weight, a Mo content from 0.5% to 2% by weight, a V content from 0.5% to 2% by weight and a content of incidental elements and impurities from 0 to 1% by weight based on the total weight of the Ti alloy, and wherein the content of Ti, Al, Mo, V and incidental elements and impurities sum up to 100 % by weight;
- a **Ti alloy** that has a Ti content from 86% to 92.5% by weight, a Al content from 5% to 7% by weight, a Mo content from 0.4% to 2% by weight, a Nb content from 1% to 3% by weight, a Ta content from 0.1% to 2% by weight and a content of incidental elements and impurities from 0 to 1% by weight based on the total weight of the Ti alloy, and wherein the content of Ti, Al, Mo, V and incidental elements and impurities sum up to 100 % by weight;
- a **Ti alloy** that has a Ti content from 89% to 91.9% by weight, a Al content from 5% to 7% by weight, a Mo content from 3% to 5% by weight, a Sn content from 1% to 3% by weight, a Si content from 0.1% to 2% by weight and a content of incidental elements and impurities from 0 to 1% by weight based on the total weight of the Ti alloy, and wherein the content of Ti, Al, Mo, Sn, Si and incidental elements and impurities sum up to 100 % by weight;
- a **Ti alloy** that has a Ti content from 82% to 89% by weight, a Al content from 5% to 7% by weight, a Mo content from 1% to 3% by weight, a Sn content from 1% to 3% by weight, a Zr content from 3% to 5% by weight and a content of incidental elements and impurities from 0 to 1% by weight based on the total weight of the Ti alloy, and wherein the content of Ti, Al, Mo, Sn, Zr and incidental elements and impurities sum up to 100 % by weight; and
- a **Ti alloy** that has a Ti content from 83% to 88.9% by weight, a Al content from 3% to 5% by weight, a Mo content from 3% to 5% by weight, a Zr content from 4% to 6% by weight, a Si content from 0.1% to 1% by weight and a content of incidental elements and impurities from 0 to 1% by weight based on the total weight of the Ti alloy, and wherein the content of Ti, Al, Mo, Zr, Si and incidental elements and impurities sum up to 100 % by weight.
- **a Ti alloy** that has a Ti content from 80.5% to 87.5% by weight, a Al content from 5% to 7% by weight, a Mo content from 0.1% to 1% by weight, a Nb content from 0.3% to 1% by weight, a Sn content from 3% to 5% by weight, a Zr content from 3% to 5% by weight, a Si content from 0.1% to 0.5% by weight and a content of incidental elements and impurities from 0 to 1% by weight based on the total weight of the Ti alloy, and wherein the content of Ti, Al, Mo, Nb, Sn, Zr, Si and incidental elements and impurities sum up to 100 % by weight.

In one embodiment of the first aspect or the second aspect the water barrier prevent moisture from penetrating in the electrical insulation system of the dynamic high voltage cable in water applications deeper than 70 m or deeper than 200 m.

**In a third aspect** there is provided method of manufacturing a dynamic power cable according to the first aspect comprising the steps:
- providing a cable core comprising an electrical conductor and an electrically insulating layer arranged radially outside of the electrical conductor, and
- wrapping a water barrier sheet radially around the cable core, the water barrier sheet is a Ti alloy and
- wherein one edge of the wrapped Ti alloy sheet is welded with an adjacent edge of the sheet forming a longitude weld forming a sheath.

In one embodiment of the third aspect the water barrier sheath and the insulating layer are fastened together by an adhesive layer to prevent movement between the insulation layer and the water barrier sheath, or wherein the water barrier sheath and the insulating layer are not fastened together to allow movement between the insulation layer and the water barrier sheath.

In one embodiment of the third aspect the water barrier sheet is welded using autogenous laser beam welding.

In one embodiment of the third aspect the water barrier sheet is corrugated.

### BRIEF DESCRIPTION OF DRAWINGS

Fig. 1 schematically illustrates one embodiment of the invention, where an example of a dynamic power cable cross section is shown comprising one cable core is shown.
Fig. 2 schematically illustrates one embodiment of the invention, where an example of a dynamic power cable cross section comprising three cable cores is shown.
Fig. 3 schematic illustration of longitude cross section through the metallic corrugated water barrier sheath; Di (inner diameter), p (pitch), D (corrugation depth), A (amplitude).

### DETAILED DESCRIPTION

In the following description, various examples and embodiments of the invention are set forth in order to provide the skilled person with a more thorough understanding of the invention. The specific details described in the context of the various embodiments and with reference to the attached drawings are not intended to be construed as limitations.

Where a numerical limit or range is stated herein, the endpoints are included. Also, all values and sub ranges within a numerical limit or range are specifically included as if explicitly written out.

As mentioned above the present invention provides a water barrier sheathing for high voltage dynamic cables for submarine applications wherein the water barrier sheathing comprises a layer made of a titanium alloy The water barrier sheathing may be either
- a longitudinally welded sheath (LWS) of a titanium alloy or
- a titanium-polymer comprising a metal foil of a titanium alloy laminated between two layers of insulating or non- insulating polymer layers.

The above describe water barrier sheathing provides a high-quality low weight water barrier sheathing that has an improved fatigue life, high tensile strength, tolerate high dynamic workload and is resistant to corrosion from seawater The term "high voltage" as applied herein refers to a voltage above 36kV such as in the range 50 kV to 500 kV.

The term "dynamic" is applied here to refer to cables that in use are exposed to movement.

The water barrier sheath as applied herein refers to a sheath comprising a layer made of titanium alloy and wherein the sheath is either a longitudinally welded sheath (LWS) or titanium-polymer composite consisting of an titanium layer laminated between two layers of insulating or non- insulating polymer layers wherein the two polymer layers are thermally joint by externally applied heat.

Alternatively, the titanium-polymer composite can have an additional polymeric layer that acts as an adhesive between the two remaining polymer layers when remelted using an external heat source. The heat source can be heat from a later polymer extrusion process applied after application of the laminate structure.

A submarine dynamic power cable is a power cable installed and allowed to move between two fixed supports. One support at the ocean floor and one at the sea level. The movement of the floating installation will induce mechanical load and fatigue on the dynamic cable.

### Titanium layer of the water barrier sheath

Titanium is a strong and light metal and is thus particular suitable for use in dynamic power cables.

It is well known that titanium and its alloys have different properties, wherein the alpha based alloys are less affected by heat treatment and microstructural variations followed by a welding operation compared to beta-phase based titanium and titanium alloys.

Thus, the titanium and titanium alloy for use in the metallic longitude welded water barrier sheath or the titanium-polymer composite consisting of a titanium layer laminated between two layers of insulating or non- insulating polymer layers. are selected from alpha titanium-based materials, alpha titanium-based alloys, near alpha titanium-based alloys and alpha - beta titanium-based alloys.

The above-mentioned titanium alloys exhibit negligible corrosion rate in seawater and other natural waters and its corrosion resistance is superior over steel and copper metal/alloys.

Table 1 to 4 below depicts further details and embodiments of the water barrier material. Materials of Tables 1 and 4 are not according to the invention.

**Table 1**

| Pure titanium | Grades 1 to 4 |
|---|---|
| Ti [wt%] | >= 99 |
| *Unavoidable impurities [wt%] | 0 - 1 |

wherein the amount of oxygen and iron does not exceed 0.5 [wt%] each.

**Table 2**

| Alpha alloys | Alloy 2 | Alloy 3 |
|---|---|---|
| Ti [wt%] | 95 - 98 | 89 - 94 |
| Cu [wt%] | 2 - 4 | |
| Al [wt%] | | 4 - 6 |
| Sn [wt%] | | 2 - 4 |
| *Unavoidable impurities [wt%] | 0 - 1 | 0 - 1 |

wherein the amount of oxygen and iron does not exceed 0.5 [wt%] each.

**Table 3**

| Near alpha alloys | Alloy 1 | Alloy 2 | Alloy 3 | Alloy 4 | Alloy 5 | Alloy 6 |
|---|---|---|---|---|---|---|
| Ti [wt%] | 87 - 91 | 86 - 92.5 | 89 - 91.9 | 82 - 89 | 83 - 88.9 | 80.5 - 87.5 |
| Al [wt%] | 7 - 9 | 5 - 7 | 3 - 5 | 5 - 7 | 3 -5 | 5 - 7 |
| Mo [wt%] | 0.5 - 2 | 0.4 - 2 | 3 - 5 | 1 - 3 | 3 - 5 | 0.1 - 1 |
| V [wt%] | 0.5 - 2 | | | | | |
| Nb [wt%] | | 1 - 3 | | | | 0.3 - 1 |
| Ta [wt%] | | 0.1 - 2 | | | | |
| Sn [wt%] | | | 1 - 3 | 1 - 3 | | 3 - 5 |
| Zr [wt%] | | | | 3 - 5 | 4 - 6 | 3 - 5 |
| Si [wt%] | | | 0.1 - 2 | | 0.1 - 1 | 0.1 -0.5 |
| Cu [wt%] | | | | | 0.4 - 2 | |
| Unavoidable impurities [wt%] | 0 - 1 | 0 - 1 | 0 - 1 | 0 - 1 | 0 - 1 | 0 - 1 |

**Table 4**

| Alpha-beta alloy | Alloy 1 |
|---|---|
| Ti [wt%] | 87 - 92 |
| Al [wt%] | 5 - 7 |
| V [wt%] | 3 - 5 |
| Unavoidable impurities [wt%] | 0 - 1 |

It is noted that any percentage amount of a metal component in an alloy described herein is provided as a fraction of the weight of the metal per total weight of the alloy as a percentage, or [wt%].

It will be appreciated by a skilled person that, where a range of a percentage amount of a metal in an alloy is given, the amount of metal in that alloy may vary within that range, provided the total amount of all metals in that alloy adds up to a total of 100 wt%.It will also be appreciated that some metals and alloys may inevitably have very small quantities of impurities within them. These impurities may be present since they are typically either too difficult or costly to remove when the metal or alloy is being produced. These impurities may be present in the range from 0.0001%, 0.001%, 0.005% or 0.01% to 0.1%, 0.5%, 1% (wt) based on the total weight of the alloy and wherein each impurity does not exceed 0.5% by weight based on the total weight of the alloy. It will be appreciated such impurities may be present in the metals and alloys of the present invention without affecting or departing from the scope of the invention and comprises the following substances iron, nitrogen, carbon, oxygen and hydrogen.

Titanium exists in two crystallographic forms. At room temperature, unalloyed commercially pure titanium has a hexagonal close-packed (hcp) crystal structure referred to as alpha (α) phase. When the temperature of pure titanium reaches 885 °C (called the β transus temperature of titanium), the crystal structure changes to a bcc structure known as beta (β) phase. Alloying elements either raise or lower the temperature for the α-to- β transformation, so alloying elements in titanium are classified as either α stabilizers or β stabilizers. For example, vanadium, niobium, chromium, manganese and molybdenum decrease the α-to-β transformation temperature and promote the formation of the β phase, while elements such as oxygen, nitrogen and aluminium are stabilizers of the α-phase.

Pure Ti material grade 1 to 4 is considered an alpha alloy because that alpha-phase is the only phase present. The material has a minimum of 99% (wt) titanium and unavoidable impurities of Fe, C, N, O and H that are interstitial solutes in the alpha phase, wherein the content of Fe and O may not exceed 0.5% (wt) each.

Common alpha Ti alloys comprise one or more of Cu, Al or Sn which are stabilizers of the alpha phase, cf. table 2.

The near Ti alpha alloys and alpha-beta Ti alloys comprises alloy elements that support both an alpha phase and a beta phase.

A near alpha Ti alloy is an alloy that comprises both alpha and beta phase stabilizer, cf. table 3 above, but wherein the amount of alloy elements that stabilizes the alpha phase is higher compared to the amount of alloy elements that stabilizes the beta phase.

An alpha-beta alloy is an alloy that comprises both alpha and beta phase stabilizer, cf. table 3 above, but wherein the amount of alloy elements that stabilizes the alpha phase is higher compared to the amount of alloy elements that stabilizes the beta phase, but wherein the amount of alloy elements that stabilizes the beta phase is higher compared to the amount of beta phase stabilizing elements of the near alpha alloys, cf. table 4.

Further the water barrier layer (not according to the invention) may be the ASTM grade 1 Pure Ti material with an alpha phase.

The water barrier layer (not according to the invention) may be the ASTM grade 2 Pure Ti material with an alpha phase.

The water barrier layer (not according to the invention) may be the ASTM grade 3 Pure Ti material with an alpha phase.

The water barrier layer (not according to the invention) may be the ASTM grade 4 Pure Ti material with an alpha phase.

The water barrier layer may be the alpha alloy Ti-2.5Cu.

The water barrier layer may be the alpha alloy Ti-5Al-2.5Sn.

The water barrier layer may be the near-alpha alloy Ti-8Al-1Mo-1V.

The water barrier layer may be the near-alpha alloy Ti-6Al-0.8Mo-2Nb-1Ta.

The water barrier layer may be the near-alpha alloy IMI550 (Ti-4Al-4Mo-2Sn-0.5Si).

The water barrier layer may be the near-alpha alloy Ti-6Al-2Mo-4Zr-2Sn.

The water barrier layer may be the near-alpha alloy IMI700 (Ti-6Al-4Mo-5Zr-1.25Cu-0.25Si).

The water barrier layer may be the near-alpha alloy IMI834 (Ti-6Al- 4Sn-4Zr-0.7Nb-0.5Mo- 0.3Si)

The water barrier layer (not according to the invention) may be the alpha-beta alloy Ti-6Al-4V.

### The dynamic power cable

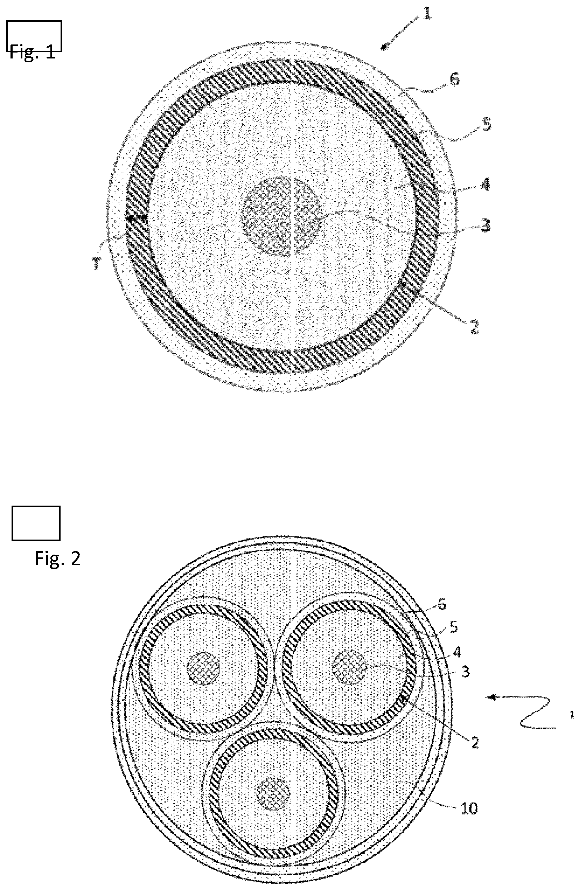

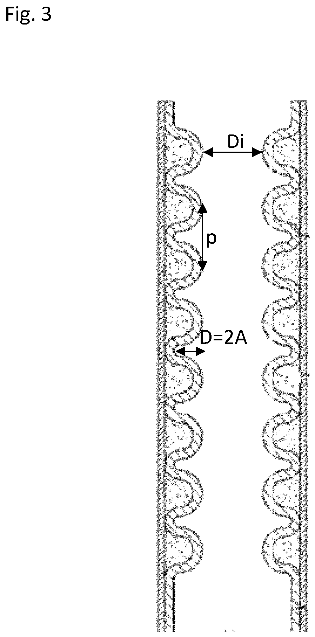

The invention is described further with reference to the Figure 1 and Figure 2 of the drawings, which shows a schematic of the cross-section of an embodiment of the cable of the invention. Figure 3 illustrates important corrugation parameters.

Fig. 1 schematically illustrates an example of a cross section of dynamic power cable 1, where the cable 1 is shown with one cable core 2. This invention is however not limited to a one-core cable, and the cable 1 may comprise two or any higher number of cores 2, as is deemed suitable for the cable's 1 purposes.

Accordingly, Fig.2 illustrates an example of a dynamic power cable 1 cross section comprising three cable cores 2.

Each core 2 comprises an electrical conductor 3 arranged in the centre of the core 2, and an electrically insulating layer 4 arranged radially outside each conductor 3. Outside the first electrically insulating layer 4, though not illustrated in the figures, there may be arranged a layer of sealing material disposed between the electrically insulating layer 4 and a water barrier layer 5. This sealing material swells upon contact with water thereby working as an extra redundancy measure to prevent ingress of moisture in case of a crack or other failure in the water barrier layer 5.

It should be noted that the cable 1, and variations thereof, may comprise additional layers, or filling material 10 as exemplified in Fig. 2 , arranged radially outside each conductor 3 or the at least one cable core 2, which will not described further herein. These layers and materials may be arranged inside, in-between or outside the already mentioned layers herein, and may comprise for example additional insulating, semiconducting, conducting, shielding and armouring layers as is well known in the art.

A polymer layer 6 may be extruded radially outside the water barrier layer 5. This process is not detailed further herein since this is a well-known process in the art will be apparent to the person skilled in the art. In other aspects of the invention, one cable core 2 may be put together with several other cable cores, as is illustrated in Fig. 2.

Power cables for intermediate to high current capacities have typically one or more electric conductors at its core followed by electric insulation and shielding of the conductors, an inner sheathing protecting the core, armouring layer, and an outer sheathing. The conductors of power cables are typically made of either aluminium or copper. The conductor may either be a single strand surrounded by electric insulating and shielding layers, or a number of strands arranged into a bunt being surrounded by electric insulating and shielding layers.

These are the typical minimum of components required to make a functional power cable with comparable high electric power transferring capacity. However, a power cable may, also comprise one or more additional components depending on the intended properties and functionalities of the power cable.

### Welded water barrier sheath

Further the water barrier sheath may be formed by welding the metal layer such as autogenous laser beam welding.

The laser beam welded Ti sheath may have an ultimate tensile strength in the range from 200 MPa to 1100 MPa according to standard test method ASTME8.

The welded titanium water barrier layer may have a thickness between 0.1 mm - 3 mm. A Ti alloy optimized for improved welding and fatigue properties may allow the thickness of the water barrier layer to be reduced to 0.1 mm, thereby decreasing the cost of a cable whilst increasing its flexibility. For certain cables, the thickness of the water barrier layer may be required to be up to 2 mm thick.

The water barrier layer may have a thickness between 0.3 - 1.5 mm. In yet further aspects, to achieve an optimal balance with respect to welding, fatigue strength and costs, the water barrier layer may have a thickness between 0.4 - 0.7 mm.

As described above the design of dynamic cables must be resistance to material fatigue caused by its constant bending caused by the floating installation as well as mechanical resistance to hydrostatic pressure at the seabed.

Thin metal sheet material of low bending stiffness but high membrane stiffness is often corrugated in order to improve bending stiffness with only a minimal increase in weight and cost.

US 2015/0248951 A1 [0011] teach that beneficial fatigue properties and improved resistance to hydrostatic pressure can be achieved by increasing the wall thickness and the corrugation depth.

Thus, the water barrier of the present invention may be corrugated.

In one embodiment the water barrier sheath is corrugated with an inner diameter (Di) in a range of 40mm to 120mm, a corrugation pitch (p) in a range of 5 mm to 100 mm and a corrugation depth (D) in range from 5 mm to 30 mm. For illustration, see figure 3.

**In a further aspect** there is provided a method of manufacture a dynamic power cable comprising a water barrier made of a titanium alloy wherein the water barrier sheath 5 is formed by wrapping a sheet of a titanium alloy radially around the insulating layer system, and wherein an edge of the wrapped titanium alloy sheet is welded with an adjacent edge of the sheet. The metallic strip may be longitudinally welded to form a welded metallic tube.

The welding process may be autogenous welding which is a form of welding in which the filler material is either supplied by melting the base material or is of identical composition. The weld may be formed entirely by melting parts of the base metal and no additional filler rod is used.

It is conceivable that several different kinds of autogenous welding techniques are used on one cable. Example of autogenous welding techniques that may be used comprises autogenous tungsten inert gas welding (TIG) and electron and laser beam welding. Preferably laser beam welding is being used with a shielding gas of helium, argon or a mixture of helium and argon both from in- and outside the tube sheath to avoid oxidation of the weld seam.

The method of manufacture the dynamic power cable may comprise a further step wherein the welded water barrier sheath is corrugated.

### Laminated water barrier sheath

There is also provided a dynamic power cable 1 comprising
- at least one cable core 2 comprising an electrical conductor 3 and an electrically insulating layer 4 that is arranged radially outside of the electrical conductor 3, and
- a water barrier laminate, wherein the water barrier laminate 3 comprises a metal foil made of a titanium-based material selected from a Ti alloy 1 laminated between at least two layers of insulating or non-insulating polymer constituting a final laminate that is insulating or non-insulating.

Isolating and non-isolating polymer layers for use in the laminated structure and laminate structures as water barrier are well known to a skilled person. Examples of isolating and non-isolating polymer layers and laminate structures can be found in EP 2 437 272 and further developments based thereon.

The term "metal foil" as used herein, refers to a metal layer of a titanium alloy which is placed in the middle of the laminate structure. The invention is not tied to use of any specific thickness of the metal foil. Any thickness known to be suited for use in water barriers in power cables by the skilled person may be applied. In one example embodiment, the metal foil is a titanium or titanium alloy disclosed in table 1 to 4 above. The thickness of the metal foil may be in one of the following ranges: from 10 to 250 µm, from 15 to 200 µm, from 20 to 150 µm, from 25 to 100 µm, and from 30 to 75 µm.

The laminated structure may be wrapped around the cable core 2 with at least some overlap between opposite edges of the laminate structure and wherein the opposite edges of the laminate structure is joined by thermal heating.

In a typical manufacturing process for forming a dynamic power cable wherein the water barrier is a laminated structure is to apply the laminated structure in form of a tape being helically wrapped around the cable core. Apart from the laminate structure being easy and cheap to produce, is that the tape form enables wrapping the laminate around the cable core with a tension to ensure a tight enclosure around the cable core and good contact between deposited laminate layers.

## Claims

1. A dynamic power cable (1) comprising
- at least one cable core (2) comprising an electrical conductor (3) and an electrically insulating layer (4) that is arranged radially outside of the electrical conductor (3), and
- a water barrier sheath (5) that is arranged radially outside of the cable core (2), wherein the water barrier sheath comprises a metal layer, wherein the metal layer is:
- a **Ti alloy** that has a Ti content from 95% to 98% by weight, a Cu content from 2% to 4% by weight and a content of incidental elements and impurities 0 to 1% by weight based on the total weight of the Ti alloy, and wherein the content of Ti, Cu and incidental elements and impurities sum up to 100 % by weight;
- a **Ti alloy** that has a Ti content of from 89% to 94% by weight, a Al content from 4% to 6% by weight, a Sn content from 2% to 4% by weight and a content of incidental elements and impurities from 0 to 1% by weight based on the total weight of the Ti alloy, and wherein the content of Ti, Al, Sn and incidental elements and impurities sum up to 100 % by weight;
- a **Ti alloy** that has a Ti content from 87% to 91% by weight, a Al content from 7% to 9% by weight, a Mo content from 0.5% to 2% by weight, a V content from 0.5% to 2% by weight and a content of incidental elements and impurities from 0 to 1% by weight based on the total weight of the Ti alloy, and wherein the content of Ti, Al, Mo, V and incidental elements and impurities sum up to 100 % by weight;
- a **Ti alloy** that has a Ti content from 86% to 92.5% by weight, a Al content from 5% to 7% by weight, a Mo content from 0.4% to 2% by weight, a Nb content from 1% to 3% by weight, a Ta content from 0.1% to 2% by weight and a content of incidental elements and impurities from 0 to 1% by weight based on the total weight of the Ti alloy, and wherein the content of Ti, Al, Mo, V and incidental elements and impurities sum up to 100 % by weight;
- a **Ti alloy** that has a Ti content from 89% to 91.9% by weight, a Al content from 5% to 7% by weight, a Mo content from 3% to 5% by weight, a Sn content from 1% to 3% by weight, a Si content from 0.1% to 2% by weight and a content of incidental elements and impurities from 0 to 1% by weight based on the total weight of the Ti alloy, and wherein the content of Ti, Al, Mo, Sn, Si and incidental elements and impurities sum up to 100 % by weight;
- a **Ti alloy** that has a Ti content from 82% to 89% by weight, a Al content from 5% to 7% by weight, a Mo content from 1% to 3% by weight, a Sn content from 1% to 3% by weight, a Zr content from 3% to 5% by weight and a content of incidental elements and impurities from 0 to 1% by weight based on the total weight of the Ti alloy, and wherein the content of Ti, Al, Mo, Sn, Zr and incidental elements and impurities sum up to 100 % by weight;
- a **Ti alloy** that has a Ti content from 83% to 88.9% by weight, a Al content from 3% to 5% by weight, a Mo content from 3% to 5% by weight, a Zr content from 4% to 6% by weight, a Si content from 0.1% to 1% by weight and a content of incidental elements and impurities from 0 to 1% by weight based on the total weight of the Ti alloy, and wherein the content of Ti, Al, Mo, Zr, Si and incidental elements and impurities sum up to 100 % by weight;
or
- a **Ti alloy** that has a Ti content from 80.5% to 87.5% by weight, a Al content from 5% to 7% by weight, a Mo content from 0.1% to 1% by weight, a Nb content from 0.3% to 1% by weight, a Sn content from 3% to 5% by weight, a Zr content from 3% to 5% by weight, a Si content from 0.1% to 0.5% by weight and a content of incidental elements and impurities from 0 to 1% by weight based on the total weight of the Ti alloy, and wherein the content of Ti, Al, Mo, Nb, Sn, Zr, Si and incidental elements and impurities sum up to 100 % by weight.

2. The dynamic power cable (1) according to claim 1, wherein the water barrier sheath is formed around the cable core and welded to form a tube.

3. The dynamic power cable (1) according to claim 1, wherein the water barrier sheath is a laminated structure comprising the metal layer in form of a foil laminated between at least two layers of insulating or non-insulating polymers.

4. The dynamic power cable according to claim 3, wherein the laminated structure being wrapped around the cable core (2) with at least some overlap between opposite edges of the laminate structure and wherein the opposite edges of the laminate structure is joined by thermal heating.

5. The dynamic power cable according to claim 2, wherein the water barrier sheath is welded by autogenous laser beam welding.

6. The dynamic power cable according to claim 2 or claim 5 wherein the water barrier sheath is corrugated.

7. The dynamic power cable according to claim 6, wherein the water barrier sheath is corrugated with an inner diameter (Di) in a range of 40mm to 120mm, a corrugation pitch (p) in a range of 5 mm to 100 mm and a corrugation depth (D) in range from 5 mm to 30 mm.

8. The dynamic power cable according to claim 5 wherein the laser beam welded Ti material has an ultimate tensile strength in the range from 200 MPa to 1100 MPa according to standard test method ASTME8.

9. The dynamic power cable according to any one of claims 1 to 8, wherein the water barrier prevent moisture from penetrating in the electrical insulation system of the dynamic high voltage cable in water applications deeper than 70 m or deeper than 200 m.

10. A method of manufacturing a dynamic power cable according to claim 2 comprising the steps:
- providing a cable core (2) comprising an electrical conductor (3) and an electrically insulating layer (4) arranged radially outside of the electrical conductor (3), and
- wrapping a water barrier sheet (5) radially around the cable core (2), the water barrier sheet (5) is Ti alloy and
- wherein one edge of the wrapped Ti alloy sheet is welded with an adjacent edge of the sheet forming a longitude weld forming a sheath.

11. The method according to claim 10, wherein the water barrier sheet is welded using autogenous laser beam welding.

## Patentansprüche

1. Dynamisches Leistungskabel (1), umfassend
- mindestens eine Kabelseele (2), die einen elektrischen Leiter (3) und eine elektrisch isolierende Schicht (4), die radial außerhalb des elektrischen Leiters (3) angeordnet ist, umfasst, und
- einen Wassersperrmantel (5), der radial außerhalb der Kabelseele (2) angeordnet ist, wobei der Wassersperrmantel eine Metallschicht umfasst, wobei die Metallschicht Folgendes ist:
- eine **Ti-Legierung,** die einen Ti-Gehalt von 95 bis 98 Gew.-%, einen Cu-Gehalt von 2 bis 4 Gew.-% und einen Gehalt an zufälligen Elementen und Verunreinigungen von 0 bis 1 Gew.-%, bezogen auf das Gesamtgewicht der Ti-Legierung, aufweist und wobei sich der Gehalt an Ti, Cu und zufälligen Elementen und Verunreinigungen zu 100 Gew.-% addiert;
- eine **Ti-Legierung,** die einen Ti-Gehalt von 89 bis 94 Gew.-%, einen Al-Gehalt von 4 bis 6 Gew.-%, einen Sn-Gehalt von 2 bis 4 Gew.-% und einen Gehalt an zufälligen Elementen und Verunreinigungen von 0 bis 1 Gew.-%, bezogen auf das Gesamtgewicht der Ti-Legierung, aufweist und wobei sich der Gehalt an Ti, Al, Sn und zufälligen Elementen und Verunreinigungen zu 100 Gew.-% addiert;
- eine **Ti-Legierung,** die einen Ti-Gehalt von 87 bis 91 Gew.-%, einen Al-Gehalt von 7 bis 9 Gew.-%, einen Mo-Gehalt von 0,5 bis 2 Gew.-%, einen V-Gehalt von 0,5 bis 2 Gew.-% und einen Gehalt an zufälligen Elementen und Verunreinigungen von 0 bis 1 Gew.-%, bezogen auf das Gesamtgewicht der Ti-Legierung, aufweist und wobei sich der Gehalt an Ti, Al, Mo, V und zufälligen Elementen und Verunreinigungen zu 100 Gew.-% addiert;
- eine **Ti-Legierung,** die einen Ti-Gehalt von 86 bis 92,5 Gew.-%, einen Al-Gehalt von 5 bis 7 Gew.-%, einen Mo-Gehalt von 0,4 bis 2 Gew.-%, einen Nb-Gehalt von 1 bis 3 Gew.-%, einen Ta-Gehalt von 0,1 bis 2 Gew.-% und einen Gehalt an zufälligen Elementen und Verunreinigungen von 0 bis 1 Gew.-%, bezogen auf das Gesamtgewicht der Ti-Legierung, aufweist und wobei sich der Gehalt an Ti, Al, Mo, V und zufälligen Elementen und Verunreinigungen zu 100 Gew.-% addiert;
- eine **Ti-Legierung,** die einen Ti-Gehalt von 89 bis 91,9 Gew.-%, einen Al-Gehalt von 5 bis 7 Gew.-%, einen Mo-Gehalt von 3 bis 5 Gew.-%, einen Sn-Gehalt von 1 bis 3 Gew.-%, einen Si-Gehalt von 0,1 bis 2 Gew.-% und einen Gehalt an zufälligen Elementen und Verunreinigungen von 0 bis 1 Gew.-%, bezogen auf das Gesamtgewicht der Ti-Legierung, aufweist und wobei sich der Gehalt an Ti, Al, Mo, Sn, Si und zufälligen Elementen und Verunreinigungen zu 100 Gew.-% addiert;
- eine **Ti-Legierung,** die einen Ti-Gehalt von 82 bis 89 Gew.-%, einen Al-Gehalt von 5 bis 7 Gew.-%, einen Mo-Gehalt von 1 bis 3 Gew.-%, einen Sn-Gehalt von 1 bis 3 Gew.-%, einen Zr-Gehalt von 3 bis 5 Gew.-% und einen Gehalt an zufälligen Elementen und Verunreinigungen von 0 bis 1 Gew.-%, bezogen auf das Gesamtgewicht der Ti-Legierung, aufweist und wobei sich der Gehalt an Ti, Al, Mo, Sn, Zr und zufälligen Elementen und Verunreinigungen zu 100 Gew.-% addiert;
- eine **Ti-Legierung,** die einen Ti-Gehalt von 83 bis 88,9 Gew.-%, einen Al-Gehalt von 3 bis 5 Gew.-%, einen Mo-Gehalt von 3 bis 5 Gew.-%, einen Zr-Gehalt von 4 bis 6 Gew.-%, einen Si-Gehalt von 0,1 bis 1 Gew.-% und einen Gehalt an zufälligen Elementen und Verunreinigungen von 0 bis 1 Gew.-%, bezogen auf das Gesamtgewicht der Ti-Legierung, aufweist und wobei sich der Gehalt an Ti, Al, Mo, Zr, Si und zufälligen Elementen und Verunreinigungen zu 100 Gew.-% addiert;
oder
- eine **Ti-Legierung,** die einen Ti-Gehalt von 80,5 bis 87,5 Gew.-%, einen Al-Gehalt von 5 bis 7 Gew.-%, einen Mo-Gehalt von 0,1 bis 1 Gew.-%, einen Nb-Gehalt von 0,3 bis 1 Gew.-%, einen Sn-Gehalt von 3 bis 5 Gew.-%, einen Zr-Gehalt von 3 bis 5 Gew.-%, einen Si-Gehalt von 0,1 bis 0,5 Gew.-% und einen Gehalt an zufälligen Elementen und Verunreinigungen von 0 bis 1 Gew.-%, bezogen auf das Gesamtgewicht der Ti-Legierung, aufweist und wobei sich der Gehalt an Ti, Al, Mo, Nb, Sn, Zr, Si und zufälligen Elementen und Verunreinigungen zu 100 Gew.-% addiert.

2. Dynamisches Leistungskabel (1) nach Anspruch 1, wobei der Wassersperrmantel um die Kabelseele herum ausgebildet und geschweißt ist, um ein Rohr zu bilden.

3. Dynamisches Leistungskabel (1) nach Anspruch 1, wobei der Wassersperrmantel eine laminierte Struktur ist, die die Metallschicht in Form einer Folie umfasst, die zwischen mindestens zwei Schichten aus isolierenden oder nicht isolierenden Polymeren laminiert ist.

4. Dynamisches Leistungskabel nach Anspruch 3, wobei die laminierte Struktur mit mindestens einer gewissen Überlappung zwischen gegenüberliegenden Kanten der Laminatstruktur um die Kabelseele (2) gewickelt ist und wobei die gegenüberliegenden Kanten der Laminatstruktur durch thermisches Erwärmen zusammengefügt ist.

5. Dynamisches Leistungskabel nach Anspruch 2, wobei der Wassersperrmantel durch autogenes Laserstrahlschweißen geschweißt ist.

6. Dynamisches Leistungskabel nach Anspruch 2 oder Anspruch 5, wobei der Wassersperrmantel gewellt ist.

7. Dynamisches Leistungskabel nach Anspruch 6, wobei der Wassersperrmantel mit einem Innendurchmesser (Di) in einem Bereich von 40 mm bis 120 mm, einem Wellenabstand (p) in einem Bereich von 5 mm bis 100 mm und einer Wellentiefe (D) in einem Bereich von 5 mm bis 30 mm gewellt ist.

8. Dynamisches Leistungskabel nach Anspruch 5, wobei das laserstrahlgeschweißte Ti-Material eine Grenzzugfestigkeit im Bereich von 200 MPa bis 1100 MPa nach dem Standardtestverfahren ASTME8 aufweist.

9. Dynamisches Leistungskabel nach einem der Ansprüche 1 bis 8, wobei die Wassersperre verhindert, dass Feuchtigkeit in das Elektroisolierungssystem des dynamischen Hochspannungskabels in Wasseranwendungen eindringt, die tiefer als 70 m oder tiefer als 200 m sind.

10. Verfahren zum Herstellen eines dynamischen Leistungskabels nach Anspruch 2, umfassend die folgenden Schritte:
- Bereitstellen einer Kabelseele (2), die einen elektrischen Leiter (3) und eine elektrisch isolierende Schicht (4), die radial außerhalb des elektrischen Leiters (3) angeordnet ist, umfasst, und
- radiales Wickeln einer Wassersperrbahn (5) um die Kabelseele (2), wobei die Wassersperrbahn (5) eine Ti-Legierung ist, und
- wobei eine Kante der umwickelten Ti-Legierungsbahn mit einer benachbarten Kante der Bahn verschweißt ist, wodurch eine Längsschweißnaht ausgebildet wird, wodurch ein Mantel ausgebildet wird.

11. Verfahren nach Anspruch 10, wobei die Wassersperrbahn unter Verwendung von autogenem Laserstrahlschweißen geschweißt wird.

## Revendications

1. Câble d'alimentation dynamique (1) comprenant
- au moins une âme (2) de câble comprenant un conducteur électrique (3) et une couche électriquement isolante (4) qui est agencée radialement à l'extérieur du conducteur électrique (3), et
- une gaine barrière à l'eau (5) qui est agencée radialement à l'extérieur de l'âme (2) de câble, ladite gaine barrière à l'eau comprenant une couche de métal, ladite couche de métal étant :
- un **alliage de Ti** qui possède une teneur en Ti de 95 % à 98 % en poids, une teneur en Cu de 2 % à 4 % en poids et une teneur en éléments imprévus et impuretés de 0 à 1 % en poids sur la base du poids total de l'alliage de Ti, et ladite teneur en Ti, Cu et en éléments imprévus et impuretés totalisant 100 % en poids ;
- un **alliage de Ti** qui possède une teneur en Ti de 89 % à 94 % en poids, une teneur en Al de 4 % à 6 % en poids, une teneur en Sn de 2 % à 4 % en poids et une teneur en éléments imprévus et impuretés de 0 à 1 % en poids sur la base du poids total de l'alliage de Ti, et ladite teneur en Ti, Al, Sn et en éléments imprévus et impuretés totalisant 100 % en poids ;
- un **alliage de Ti** qui possède une teneur en Ti de 87 % à 91 % en poids, une teneur en Al de 7 % à 9 % en poids, une teneur en Mo de 0,5 % à 2 % en poids, une teneur en V de 0,5 % à 2 % en poids et une teneur en éléments imprévus et impuretés de 0 à 1 % en poids sur la base du poids total de l'alliage de Ti, et ladite teneur en Ti, Al, Mo, V et en éléments imprévus et impuretés totalisant 100 % en poids ;
- un **alliage de Ti** qui possède une teneur en Ti de 86 % à 92,5 % en poids, une teneur en Al de 5 % à 7 % en poids, une teneur en Mo de 0,4 % à 2 % en poids, une teneur en Nb de 1 % à 3 % en poids, une teneur en Ta de 0,1 % à 2 % en poids et une teneur en éléments imprévus et impuretés de 0 à 1 % en poids sur la base du poids total de l'alliage de Ti, et ladite teneur en Ti, Al, Mo, V et en éléments imprévus et impuretés totalisant 100 % en poids ;
- un **alliage de Ti** qui possède une teneur en Ti de 89 % à 91,9 % en poids, une teneur en Al de 5 % à 7 % en poids, une teneur en Mo de 3 % à 5 % en poids, une teneur en Sn de 1 % à 3 % en poids, une teneur en Si de 0,1 % à 2 % en poids et une teneur en éléments imprévus et impuretés de 0 à 1 % en poids sur la base du poids total de l'alliage de Ti, et ladite teneur en Ti, Al, Mo, Sn, Si et en éléments imprévus et impuretés totalisant 100 % en poids ;
- un **alliage de Ti** qui possède une teneur en Ti de 82 % à 89 % en poids, une teneur en Al de 5 % à 7 % en poids, une teneur en Mo de 1 % à 3 % en poids, une teneur en Sn de 1 % à 3 % en poids, une teneur en Zr de 3 % à 5 % en poids et une teneur en éléments imprévus et impuretés de 0 à 1 % en poids sur la base du poids total de l'alliage de Ti, et ladite teneur en Ti, Al, Mo, Sn, Zr et en éléments imprévus et impuretés totalisant 100 % en poids ;
- un **alliage de Ti** qui possède une teneur en Ti de 83 % à 88,9 % en poids, une teneur en Al de 3 % à 5 % en poids, une teneur en Mo de 3 % à 5 % en poids, une teneur en Zr de 4 % à 6 % en poids, une teneur en Si de 0,1 % à 1 % en poids et une teneur en éléments imprévus et impuretés de 0 à 1 % en poids sur la base du poids total de l'alliage de Ti, et ladite teneur en Ti, Al, Mo, Zr, Si et en éléments imprévus et impuretés totalisant 100 % en poids ;
ou
- un **alliage de Ti** qui possède une teneur en Ti de 80,5 % à 87,5 % en poids, une teneur en Al de 5 % à 7 % en poids, une teneur en Mo de 0,1 % à 1 % en poids, une teneur en Nb de 0,3 % à 1 % en poids, une teneur en Sn de 3 % à 5 % en poids, une teneur en Zr de 3 % à 5 % en poids, une teneur en Si de 0,1 % à 0,5 % en poids et une teneur en éléments imprévus et impuretés de 0 à 1 % en poids sur la base du poids total de l'alliage de Ti, et ladite teneur en Ti, Al, Mo, Nb, Sn, Zr, Si et en éléments imprévus et impuretés totalisant 100 % en poids.

2. Câble d'alimentation dynamique (1) selon la revendication 1, ladite gaine barrière à l'eau étant formée autour de l'âme de câble et soudée pour former un tube.

3. Câble d'alimentation dynamique (1) selon la revendication 1, ladite gaine barrière à l'eau étant une structure stratifiée comprenant la couche métallique sous la forme d'une feuille stratifiée entre au moins deux couches de polymères isolants ou non isolants.

4. Câble d'alimentation dynamique selon la revendication 3, ladite structure stratifiée étant enroulée autour de l'âme (2) de câble avec au moins un certain chevauchement entre des bords opposés de la structure stratifiée et lesdits bords opposés de la structure stratifiée étant joints par chauffage thermique.

5. Câble d'alimentation dynamique selon la revendication 2, ladite gaine barrière à l'eau étant soudée par soudage par faisceau laser autogène.

6. Câble d'alimentation dynamique selon la revendication 2 ou la revendication 5, ladite gaine barrière à l'eau étant ondulée.

7. Câble d'alimentation dynamique selon la revendication 6, ladite gaine barrière à l'eau étant ondulée avec un diamètre interne (Di) dans une plage de 40 mm à 120 mm, un pas d'ondulation (p) dans une plage de 5 mm à 100 mm et une profondeur d'ondulation (D) dans une plage de 5 mm à 30 mm.

8. Câble d'alimentation dynamique selon la revendication 5, ledit matériau Ti soudé par faisceau laser possédant une résistance à la traction ultime comprise dans la plage allant de 200 MPa à 1100 MPa selon le procédé d'essai standard ASTME8.

9. Câble d'alimentation dynamique selon l'une quelconque des revendications 1 à 8, ladite barrière à l'eau empêchant l'humidité de pénétrer dans le système d'isolation électrique du câble haute tension dynamique dans des applications en eau à plus de 70 m de profondeur ou à plus de 200 m de profondeur.

10. Procédé de fabrication d'un câble d'alimentation dynamique selon la revendication 2, comprenant les étapes suivantes :
- la fourniture d'au moins une âme (2) de câble comprenant un conducteur électrique (3) et une couche électriquement isolante (4) qui est agencée radialement à l'extérieur du conducteur électrique (3), et
- l'enroulement radial d'une feuille barrière à l'eau (5) autour de l'âme (2) de câble, la feuille barrière à l'eau (5) est en alliage de Ti et
- un bord de la feuille d'alliage de Ti enroulée étant soudée avec un bord adjacent de la feuille formant une soudure de longitude formant une gaine.

11. Procédé selon la revendication 10, ladite feuille barrière à l'eau étant soudée à l'aide d'un soudage par faisceau laser autogène.
